# EUROPEAN PATENT SPECIFICATION

(11) **EP 3 944 476 B1**
(45) Date of publication and mention of the grant of the patent: **18.09.2024**
(21) Application number: 20187147.2
(22) Date of filing: 22.07.2020
(51) Int. Cl.: H02K 11/33, H02K 11/05, H05K 7/14, H02K 5/20, H02K 9/197

(54) **INVERTER AND ELECTRIC MOTOR COMPRISING AN INVERTER OF THIS TYPE**
WECHSELRICHTER UND ELEKTROMOTOR MIT EINEM SOLCHEN WECHSELRICHTER
ONDULEUR ET MOTEUR ÉLECTRIQUE COMPRENANT UN ONDULEUR DE CE TYPE

(43) Date of publication of application: 26.01.2022
(73) Proprietor: Mahle International GmbH, 70376 Stuttgart (DE)
(72) Inventor: AHEC, Ziga, 1290 Grosuplje (SI); BABIC, Gregor, 1312 Videm-Dobrepolje (SI); DIMOVSKI, Jan, 1000 Ljubljana (SI); ILOVAR, Ziga, 8212 Velika Loka (SI); VERDEV, Luka, 3320 Velenje (SI); VRTOVEC, Rok, 5261 Sempas (SI)
(74) Representative: BRP Renaud & Partner mbB Rechtsanwälte Patentanwälte Steuerberater

(56) References cited:
- EP-A1- 3 634 096
- DE-A1- 102017 222 822
- US-A1- 2013 010 426
- US-A1- 2019 246 487
- US-B2- 9 160 207

## Description

The invention relates to an inverter for an electric motor according to the preamble of claim 1. The invention also relates to an electric motor comprising an inverter of this type.

An electric motor comprising an inverter is known, for example, from EP 3 334 015 A1, CN 207 150 359 U, and CN 106 981 954 A. The electric motor usually comprises a rotor and a stator, which interact electromagnetically with one another. The inverter usually comprises a capacitor plate comprising capacitors, a transistor plate comprising transistors, and a control board, and converts the direct current into the three-phase current for the stator. The capacitor plate, the transistor plate, and the control board are usually accommodated in a housing, which is secured to the stator or to a stator housing, respectively, of the stator. In response to the assembly of the inverter, the capacitor plate, the transistor plate, and the control board are thereby assembled one after the other to the stator and are electrically interconnected. Afterwards, the housing is secured to the stator or to the stator housing, respectively. Disadvantageously, the assembly of the inverter is thus rather complex, whereby the costs are increased. The inverter can further only be scaled slightly and is unsuitable for production in large quantities. The inverter can further only be tested with regard to the functionality when it is completely assembled on the housing and is electrically connected to the stator.

US9160207B2 discloses a motor with a control box with a circuit board and a power panel. The circuit board and the power panel are arranged in the control box and are fixed to a bottom of the control box.

US 2019/0246487 A1 discloses an inverter with a transistor plate, a control board, a capacitor plate and a cooling plate. The transistor plate, the control board and the capacitor plate are fastened to the cooling plate.

EP 3 634 096 A1 discloses an inverter with a control board, a capacitor plate and several transistors. All elements are arranged in a housing, wherein the control board is fastened to a bottom of the housing.

US 2013/0010426 A1 discloses an electronic control device for an electric actuator. The electronic control device contains several electronical components arranged in a housing.

DE 10 2017 222 822 A1 discloses an electric machine with a housing and a cover with can be flowed through by a cooling fluid.

It is thus the object of the invention to specify an improved or at least alternative embodiment for an inverter of the generic type, in the case of which the described disadvantages are overcome. It is also the object of the invention to provide an electric motor comprising the inverter.

These objects are solved according to the invention by the subject matter of the independent claims. Advantageous embodiments are subject matter of the dependent claims.

An inverter is provided for an electric motor. The inverter comprises a control board, a capacitor plate comprising several capacitors, several transistor plates each comprising several transistors, and a cooling plate. The inverter further comprises a hollow cylindrical carrier comprising a central axis. The control board, the capacitor plate, the respective transistor plates, and the cooling plate are located axially one on top of the other. There, the control board, the capacitor plate, and the respective transistor plates are electrically interconnected. The cooling plate closes axially the carrier, which receives the capacitor plate, the transistor plates, and the control board, and encases them in the circumferential direction to the outside. According to the invention, the carrier supports the control board, the capacitor plate, and the transistor plates, and. The inverter thus forms a cohesive and assembly-ready assembly unit with the carrier, the control board, the capacitor plate, the transistor plates, and the cooling plate. The inverter according to the invention can advantageously be fully assembled, independently of further elements of the electric motor. The effort as well as the costs can thus be reduced. In addition, the inverter can already be tested with regard to its functionality prior to the assembly to further elements of the electric motor.

Here and further, the terms "axial" and "radial" always refer to the central axis of the carrier. In connection with the present invention, the term "to support" thus means that the capacitor plate, the transistor plates, and the control board are aligned in the right position to each other via the carrier. The carrier is preferably made of plastic and is not electroconductive. The carrier protects the capacitor plate, the transistor plates, and the control board to the outside and aligns them to one another. The capacitor plate, the transistor plates, and the control board are arranged one on top of the other in a sandwich-like manner and are axially spaced apart from one another in the carrier, wherein the capacitor plate is preferably arranged between the control board and the transistor plates. The transistors are mainly MOSFET.

According to the invention, a ring-shaped carrier ring, which is aligned transversely to the central axis, is integrally molded in the carrier. The transistor plates are then distributed on the ring-shaped carrier ring so as to revolve around the central axis and are fastened in a non-positive manner. The carrier ring divides an interior of the carrier into two axially adjacent areas, wherein the transistor plates are received and secured in the first area, and the capacitor plate and the control board are received and secured in the second axial area. The carrier ring is formed in a ring-shaped manner, so that a centrally located opening is formed in the carrier ring.

It can additionally be provided that at least one undercut securing element and at least one clip for the respective transistor plate are formed on the carrier ring. The respective transistor plate is then fastened in a clamping manner to the carrier ring by means of the at least one securing element and the at least one clip. The at least one securing element and the at least one clip are advantageously arranged so as to be located opposite one another or the at least one securing element is assigned to one side and the at east one clip is assigned to an opposite side of the respective transistor plate, respectively. The respective transistor plate can then be guided underneath the at least one securing element and can be clipped to the carrier ring by means of the at least one clip. Two securing elements and two clips for the respective transistor plate are preferably formed on the carrier ring, so that a tilting of the respective transistor plate on the carrier ring is prevented.

It can advantageously be provided that the capacitor plate, an elastically deformable foam plate, and a pressure plate are arranged on the carrier ring, facing away from the transistor plates. The pressure plate is firmly connected - for example screw-connected - to the cooling plate through the carrier ring, and the capacitor plate is thus pressed via the foam plate in the direction of the carrier ring and of the transistor plates. In other words, the pressure plate presses the foam plate against the capacitor plate and thus the capacitor plate in the direction of the carrier ring.

Several axial slots, in each of which a contact bus bar is received, can advantageously be molded in the carrier ring. The respective contact bus bar is thereby pressed between the respective transistor plate and the capacitor plate, and the transistor plates are thus electrically contacted with the capacitor plate. The contact bus bar is axially aligned in the respective slot and is in contact with the respective transistor plate on the one hand and with the capacitor plate on the other hand. The capacitor plate is pressed against the transistor plates by means of the foam plate and the pressure plate, and the respective contact bus bar is pressed between the capacitor plate and the respective transistor plate. A sufficiently high contact pressure can thereby be generated by means of the foam plate, whereby a secure electrical contacting is attained between the respective transistor plate and the capacitor plate. The contact bus bar advantageously has electroconductive paths or is formed completely of an electroconductive material.

As described above, the pressure plate is firmly connected - for example screw-connected - to the cooling plate through the carrier ring. In this way, a sandwich-like structure is created, in which the foam plate, the capacitor plate, the contact bus-burs, and the transistor plates are axially pressed together - i.e. are sandwiched - between the pressure plate and the cooling plate. There, the carrier ring aligns the components in right position to each other in the inverter.

In the case of an advantageous embodiment of the inverter, it is provided that the inverter has several electroconductive contact pins for interconnecting the respective transistor plate with the control board. The respective contact pins are cast integrally into the carrier and are aligned axially from the transistor plates towards the control board. The carrier is advantageously made of plastic and is not electroconductive. The respective contact pin can be metallic, for example. It goes without saying that at least some areas of the respective contact pin are not cast integrally into the carrier or are open to the outside, respectively, and serve for a contacting with the control board and the respective transistor plate. It also goes without saying that several contact pins can also be assigned to the respective transistor plate. It additionally goes without saying that the contact pin is electrically contacted with transistors of the respective transistor plate via electroconductive lines on the transistor plate. Due to the integrally cast contact pin, the position thereof in the carrier is predefined, so that the contacting of the respective transistor plate with the control board is simplified.

The carrier preferably has the carrier ring as described above and the respective contact pin is cast integrally into the carrier ring. The respective transistor plate is then arranged so as to abut against the carrier ring in the first axial area of the carrier and the respective contact pins are cast integrally into the carrier ring in the second axial area of the carrier. In other words, the contact pins and the transistor plates are separated from one another via the carrier ring. The carrier and therefore the carrier ring are made of a plastic and are electrically insulating. The electrical contacting of the respective transistor plate with the assigned contact pin then takes place through the carrier ring. For this purpose, contact openings can be provided in the carrier ring. The respective contact pin can be L-shaped, for example, and can be partially arranged parallel to the transistor plates and partially perpendicular to the transistor plates on the carrier ring.

It can advantageously be provided that the respective transistor plate is electrically contacted with the respective assigned contact pin via an electroconductive wire. The wire is thereby wire bonded - for example ultra-sonic wire bonded - to the respective transistor plate and to the respective contact pin. The position of the contact pin as well as of the transistor plate in the carrier is advantageously predefined, so that the contacting of the respective transistor plate with the respective assigned contact pin can take place in an automated manner. The wire can in particular be wire bonded in an automated manner to the respective transistor plate and to the respective contact pin. The assembly of the inverter can thus be simplified and the production costs can be reduced. If the carrier ring is formed integrally in the carrier as described above, the respective wire can be guided from the transistor plate to the respective contact pin through the contact opening of the carrier ring.

It can advantageously be provided that, facing the control board, the respective contact pin has an end-side thickening, and the control board has a receiving opening for the respective thickening. The respective thickening then engages with the respective receiving opening, so that the contact pin is fastened in a clamping manner in the control board and is contacted with the control board in an electroconductive manner by a press-fit connection. It goes without saying that an electroconductive contact point is formed on the control board around the or in the receiving opening, so that the respective contact pin is electrically contacted with further elements of the control board via the respective contact point. The control board is thereby arranged spaced apart from and parallel to the transistor plates. The distance between the control board and the transistor plates thereby corresponds approximately to the axial height of the contact pins. The contact pins are thereby advantageously arranged so as to be distributed around the central axis of the carrier, so that all transistor plates can be contacted with the control board.

In an advantageous embodiment of the inverter, it is provided that the cooling plate can be flowed through by a cooling fluid. The cooling plate abuts thereby against the transistor plates so as to transfer heat. The transistors can thus be cooled particularly effectively. To increase the cooling capacity, ribs can be formed in a cooling duct of the cooling plate, which can be flown through. The position of the ribs in the cooling duct can advantageously correlate with the position of the transistors, so that the transistors can be cooled particularly effectively. The cooling fluid can be water, for example.

The capacitors can advantageously be arranged on the capacitor plate facing the transistor plates. The transistor plates can then be arranged in the carrier so as to revolve as well as so as to be distributed around the central axis, and the capacitors can be arranged centrally on the capacitor plate. The capacitors are then axially guided between the transistor plates. Due to this advantageous design of the inverter, a compact construction of the inverter can be attained. If the inverter has the above-described cooling plate, the cooling plate can be ring-shaped and its shape can follow the arrangement of the transistor plates in the carrier. The capacitors can then be axially guided through a central opening of the ring-shaped cooling plate and can be radially pressed against the cooling plate so as to transfer heat. If the transistor plates are fastened to the carrier ring of the carrier, the capacitors also protrude through the opening of the carrier ring.

In the case of an advantageous embodiment of the inverter, it is provided that the inverter comprises two battery terminals, which are identical to one another, each comprising three pole contacts for contacting with the capacitor plate. The battery terminals are thereby centrally fastened to the capacitor plate and are axially aligned. The battery terminals are additionally arranged so as to face the transistor plates. The battery terminals are thereby formed by a respective connecting piece comprising a dielectric casing and electroconductive lines located on the inside. The identical battery terminals simplify the setup of the inverter. Due to the central arrangement of the battery terminals, negative effects and losses in the inverter can additionally be minimized. The transistor plates can advantageously be arranged in the carrier so as to revolve and so as to be distributed around the central axis. The battery terminals are then guided to the outside between the transistor plates. If the carrier has the above-described carrier ring, the battery terminals can also be guided to the outside through an opening of the carrier ring.

The respective battery terminal can advantageously have a first bridge, which is parallel to the capacitor plate and which connects the central pole contact to the one lateral pole contact in an electroconductive manner. The respective battery terminal additionally has a second bridge, which is parallel to the capacitor plate and which connects the central pole contact to the other lateral pole contact in an electroconductive manner. The first bridge and the second bridge are aligned at an angle to one another and are axially offset to one another. The first bridge of the one battery terminal then bridges the second bridge of the other battery terminal, so that the pole contacts of the one battery terminal and the pole contacts of the other battery terminal are arranged in a circle and so as to alternately in a circle. The one battery terminal is advantageously assigned to the positive pole and the other battery terminal is assigned to the negative pole. The pole contacts of the one battery terminal are then the positive pole contacts, and the pole contacts of the other battery terminal are then the negative pole contacts. The positive pole contacts and the negative pole contacts then alternate in a circle on the capacitor plate. Negative effects in the inverter can be minimized due to this advantageous design of the battery terminals.

The invention also relates to an electric motor. The electric motor comprises a rotor, which can be rotated around an axis of rotation, and a stator, which interact electromagnetically with one another. The stator comprises several stator coils, wherein at least some of the stator coils are electrically contacted directly with three electrical phases via their coil wires. The electric motor comprises at least one electroconductive phase terminal, which is provided for the respective phase and which is connected to the assigned coil wire in an electroconductive manner. According to the invention, the electric motor comprises the above-described inverter. The inverter is fastened to the stator facing the phase terminals, wherein the phase terminals engage with the inverter and are electrically contacted with the transistor plates. The respective electrical phase for the stator is then realized via the respective transistor plates. In addition to the stator coils, the stator can comprise a stator housing and/or a coil carrier, so that the wording "on the stator" also captures the wording "on the stator housing" and/or "on the coil carrier".

It can advantageously be provided that the respective phase terminal is located radially on the outside of the assigned coil wire and the assigned coil wire thus engages radially with the respective phase terminal. An elastically deformable base is in each case arranged between the respective phase terminals and the stator, and the respective phase terminals are pressed against the stator by means of a press ring and are thus fastened to the stator. Due to the press ring, a contact pressure is advantageously generated, by means of which the phase terminals are securely secured to the stator. The press ring can for example be screw-connected to the stator.

Further important features and advantages of the invention follow from the subclaims, from the drawings, and from the corresponding figure description on the basis of the drawings.

It goes without saying that the above-mentioned features and the features, which will be described below, cannot only be used in the respective specified combination, but also in other combinations or alone, without leaving the scope of the present invention.

Preferred exemplary embodiments of the invention are illustrated in the drawings and will be described in more detail in the following description, whereby identical reference numerals refer to identical or similar or functionally identical components.

In each case schematically
- Figs. 1 to 3: show an exploded view and further views of an inverter according to the invention;
- Fig. 4: shows a view of a carrier in the inverter according to the invention;
- Figs. 5 to 7: show views of the carrier comprising transistor plates in the inverter according to the invention;
- Figs. 8 and 9: show an exploded view and a view of a capacitor plate comprising battery terminals in the inverter according to the invention;
- Fig. 10: shows a view of the individual battery terminal in the inverter according to the invention;
- Figs. 11 and 12: show views of the two battery terminals in the inverter according to the invention;
- Fig. 13: shows a view of the carrier comprising the transistor plates and a cooling plate in the inverter according to the invention;
- Fig. 14: shows a view of the cooling plate comprising transistors in the inverter according to the invention;
- Figs. 15 and 16: show views of the cooling plate in the inverter according to the invention;
- Fig. 17: shows a view of the carrier comprising a foam plate in the inverter according to the invention;
- Fig. 18: shows a view of the carrier comprising a pressure plate in the inverter according to the invention;
- Fig. 19: shows a view of the carrier comprising a control board in the inverter according to the invention;
- Figs. 20 and 21: show views of the inverter according to the invention without a and with a cover;
- Fig. 22: shows a sectional view of the inverter according to the invention;
- Fig. 23: shows an exploded view of an electric motor according to the invention comprising the inverter according to the invention;
- Fig. 24: shows a sectional view of the electric motor according to the invention;
- Fig. 25: shows a view of the electric motor according to the invention without the inverter;
- Figs. 26 and 27: show views of a phase terminal in the electric motor according to the invention.

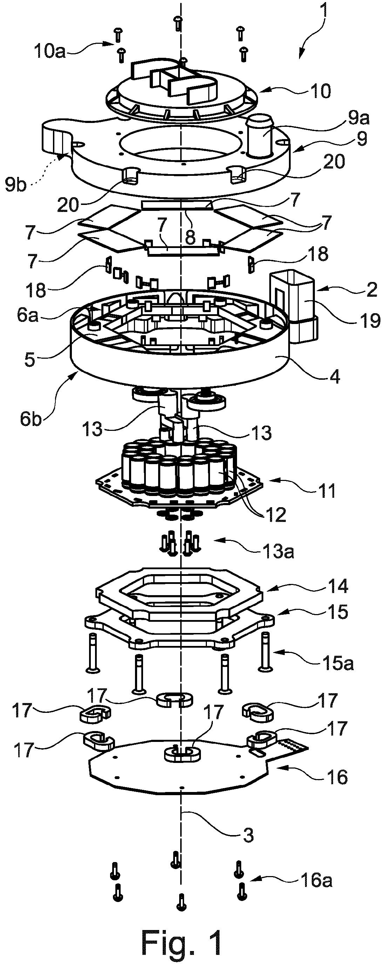

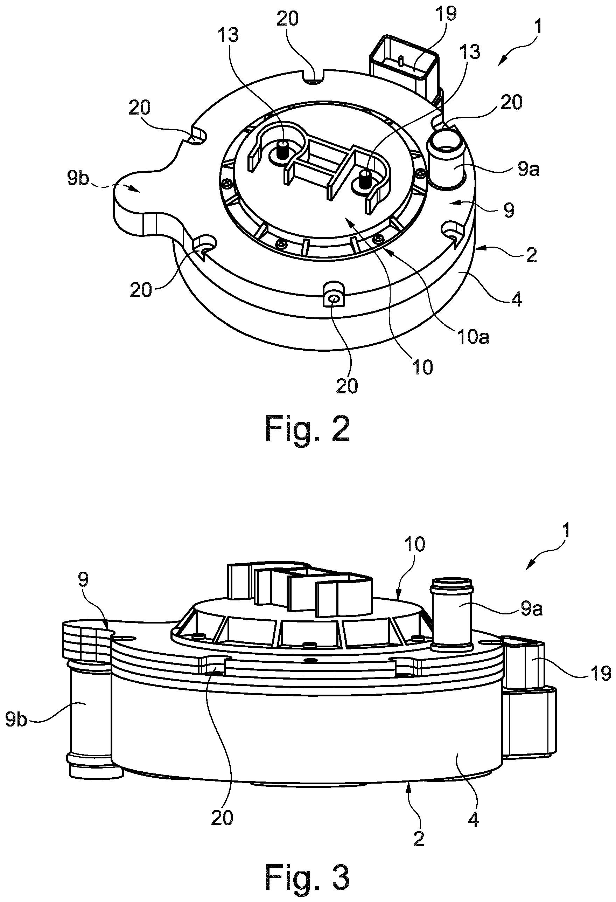

Fig. 1 shows an exploded view of an inverter 1 according to the invention for an electric motor 32. The inverter 1 thereby comprises a carrier 2 comprising a central axis 3. The carrier 2 thereby has a wall 4 and a ring-shaped carrier ring 5. The wall 4 revolves around the central axis 3 and is axially aligned. The carrier ring 5 is formed integrally on the wall 3 and is aligned radially to the inside. The carrier ring 5 divides the carrier 2 into a first area 6a and into a second area 6b, which are axially adjacent. Several transistor plates 7 comprising transistors 8, a cooling plate 9, and a cover 10 of the inverter 1 are assembled on the first area 6a. A capacitor plate 11 comprising capacitors 12, two battery terminals 13, a foam plate 14, a pressure plate 15, a control board 16, and several iron cores 17 are assembled on the second area 6b. The transistor plates 7 are electrically contacted through the carrier ring 5 with the capacitor plate 11 by means of several contact bus bars 18. In addition, a connection 19 for the control board 16 is formed on the carrier 2. The inverter 1 further comprises a screw group 10a for the cover 10, a screw group 13a for the battery terminals 13, a screw group 15a for the pressure plate 15, and a screw group 16a for the control board 16. The further setup of the inverter 1 is described in more detail on the basis of Fig. 2 to Fig. 22.

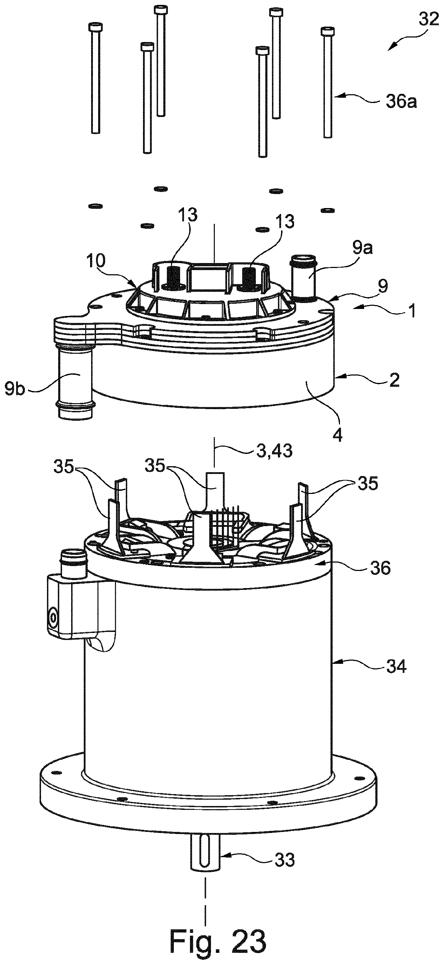

Fig. 2 and Fig. 3 show views of the assembled inverter 1 from a side facing the first area 6a of the carrier 2. In the inverter 1, the carrier 2 supports all further elements of the inverter 1, so that the inverter 1 forms a cohesive and assembly-ready assembly unit. In other words, the inverter 1 can be assembled independently of further elements of the electric motor 32 - see also Fig. 23 with regard to this. As can be seen in Fig. 2, the two battery terminals 13 - which are advantageously assigned to the positive pole and the negative pole - protrude from the cover 10. A cooling fluid - for example water - can flow through the cooling plate 9 and has an inlet 9a and an outlet 9b for the cooling fluid. In addition, several screw openings 20 for securing the inverter 1 in the electric motor 32 are formed on the cooling plate 9 - see Fig. 23 with regard to this.

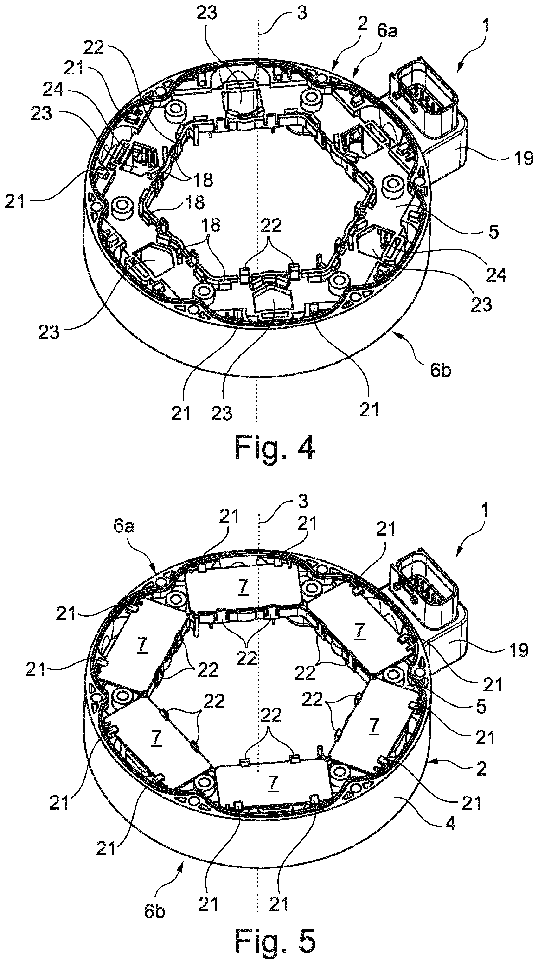

Fig. 4 shows a view of the carrier 2 from a side facing the first area 6a of the carrier 2. The contact bus bars 18 are already received here in the carrier ring 5 of the carrier 2. For this purpose, several slots are molded in the carrier ring 6, in which the contact bus bars 18 are received and axially aligned.

Fig. 5 shows a view of the carrier 2 comprising the transistor plates 7 from a side facing the first area 6a of the carrier 2. The transistor plates 7 are thereby arranged so as to revolve and so as to be distributed around the central axis 3 and are secured to the carrier ring 5 in a clamping or non-positive manner, respectively. For this purpose, two undercut securing elements 21 and two clips 22 are in each case formed on the carrier ring 5 for the respective transistor plate 7. The respective securing elements 21 are thereby arranged radially on the outside and the respective clips 22 are arranged radially on the inside. When securing the respective transistor plate 7, the latter is pushed with one side underneath the securing clamp 21 and is clipped to the carrier ring 5 via the clips 22 on an opposite side.

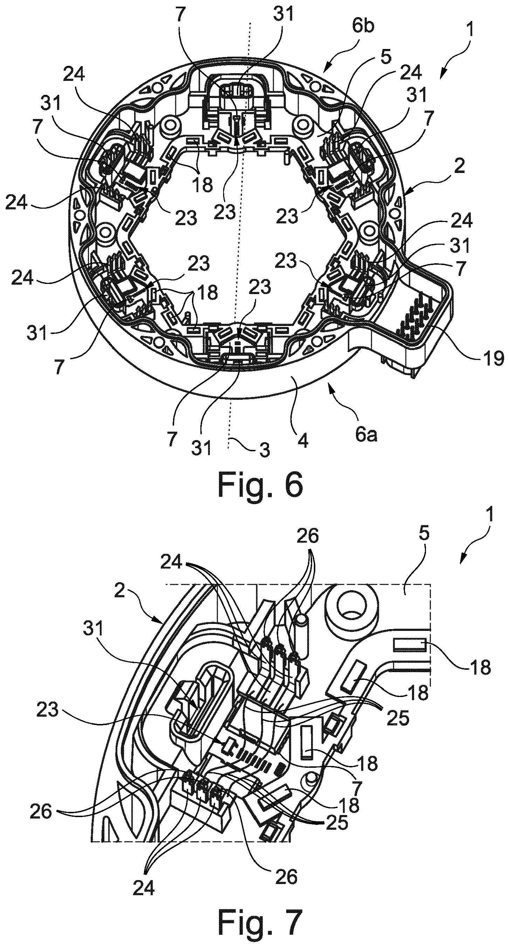

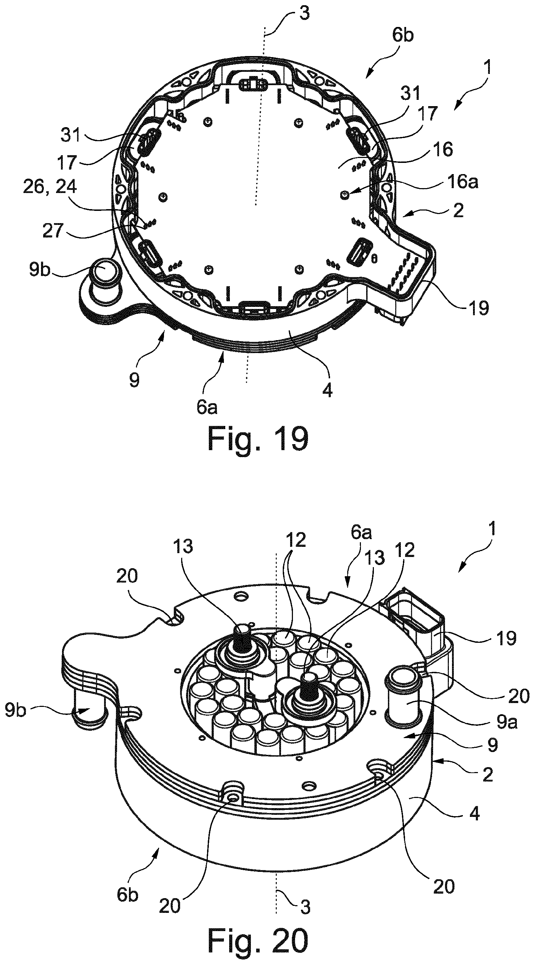

Fig. 6 shows a view of the carrier 2 comprising the transistor plates 7 from a side facing the second area 6b of the carrier 2. Fig. 7 shows an enlarged section from Fig. 6. For the respective transistor plate 7, the carrier ring 5 has a contact opening 23, so that contact points of the respective transistor plate 7 can be reached from a side of the carrier ring 5 facing the second area 6b. The inverter 1 further has several electroconductive contact pins 24, which are cast integrally into the carrier ring 5. The contact pins 24 are thereby arranged around the contact opening 23 and are in each case electrically contacted with contact points of the respective transistor plate 7 via a respective electroconductive wire 25. The respective wire 25 is thereby wire bonded to the assigned contact point and the assigned contact pin 24. The respective contact pin 24 is thereby L-shaped and extends partially axially from the carrier ring 5 to the control board 16. On the respective contact pin 24, a thickening 26 is formed facing the control board 16. The thickening 26 engages with a receiving opening 27 of the control board 16 - see also Fig. 19 with regard to this - and secures the contact pin 24 in the control board 16 in a clamping manner. The contact bus bars 18 arranged in the slots of the carrier ring 5 are electrically contacted with the transistor plate 7.

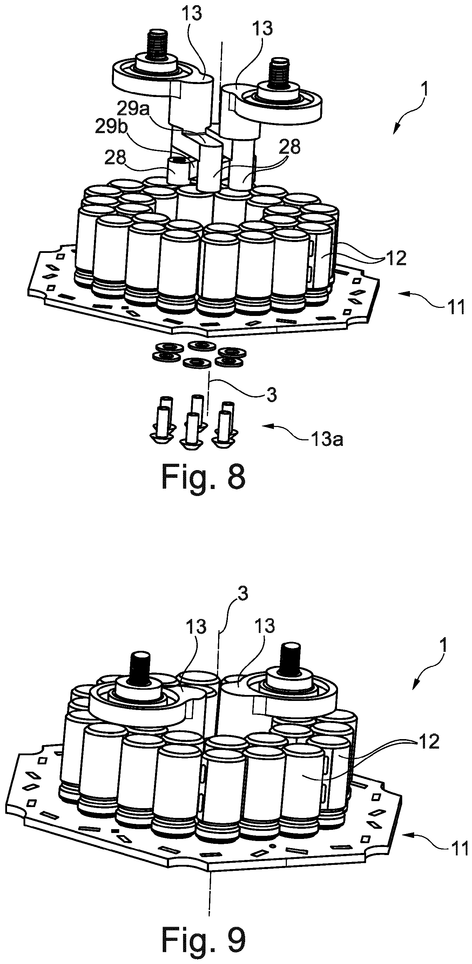

Fig. 8 shows an exploded view and Fig. 9 shows a view of the assembled state of the capacitor plate 11, of the battery terminals 13, and of the screw group 13a. The battery terminals 13 are formed identically to one another and are fastened centrally on the capacitor plate 11 by means of the screw group 13a. The respective battery terminal 13 is formed by a connecting piece comprising a dielectric casing and electroconductive lines located on the inside. The respective battery terminal 13 thereby has a total of three pole contacts 28, which are electrically contacted with the capacitors 12 of the capacitor plate 11 via a respective assigned screw of the screw group 13a and via electroconductive lines. The pole contacts 28 of the battery terminals 13 are thereby arranged in a circle and centrally on the capacitor plate 11. The capacitors 12 surround the pole contacts 28 of the battery terminals and are arranged symmetrically on the capacitor plate 11. The one battery terminal 13 is thereby assigned to the negative pole and the other battery terminal 13 is assigned to the positive pole.

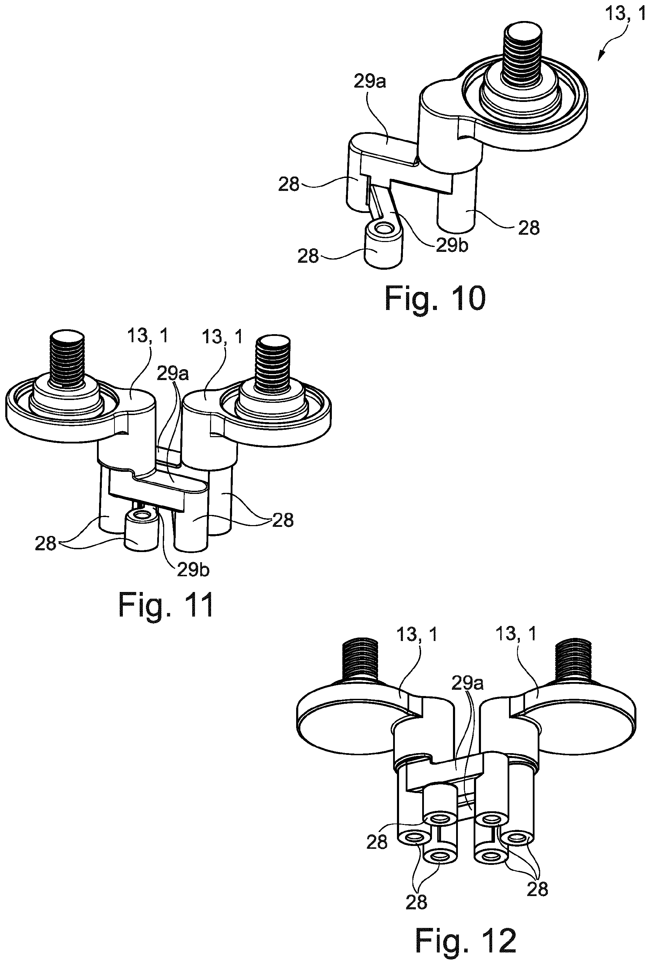

Fig. 10 shows a view of the individual battery terminal 13. Fig. 11 and Fig. 12 show views of the battery terminals 13. The respective battery terminal 13 thereby has a first bridge 29a, which is parallel to the capacitor plate 11, and a second bridge 29b, which is parallel to the capacitor plate 11. The first bridge 29a and the second bridge 29b are thereby formed axially offset to one another. The respective bridge 29a or 29b, respectively, thereby connects two of the pole contacts 28 of the respective battery terminal 13 in an electroconductive manner. As can be seen in Fig. 11 and Fig. 12, the first bridge 29a of the one battery terminal 13 bridges the second bridge 29b of the other battery terminal 13, so that the pole contacts 28 of the battery terminals 13 are arranged in a circle and so as to alternate in a circle.

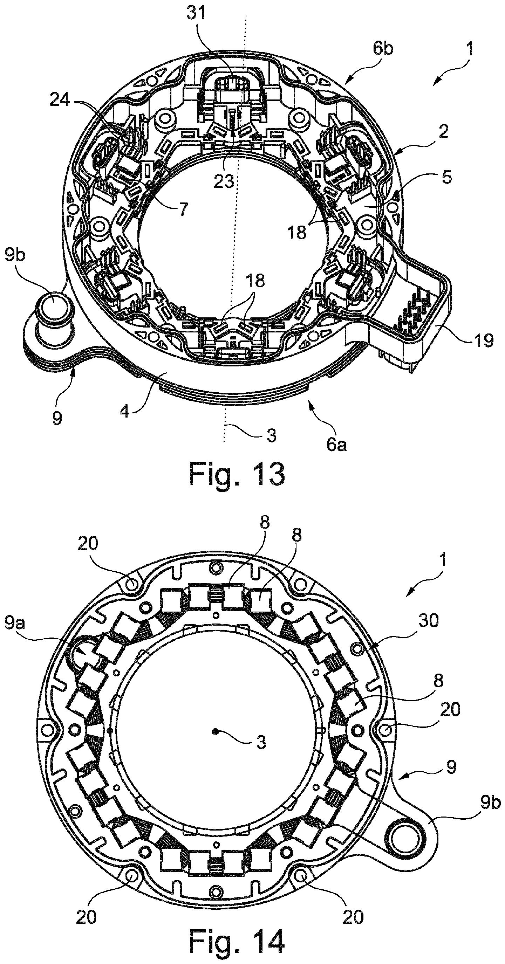

Fig. 13 shows a view of the carrier 2 comprising the transistor plates 7 and the cooling plate 9 from a side facing the second area 6b of the carrier 2. As can be seen here, the ring-shaped cooling plate 9 abuts against the transistor plates 7 so as to transfer heat in the first area 6a of the carrier 2. Fig. 14 shows a view of the cooling plate 9 comprising transistors 8 of the respective transistor plates 7. For the sake of clarity, the transistor plates 7 are illustrated in a transparent manner here.

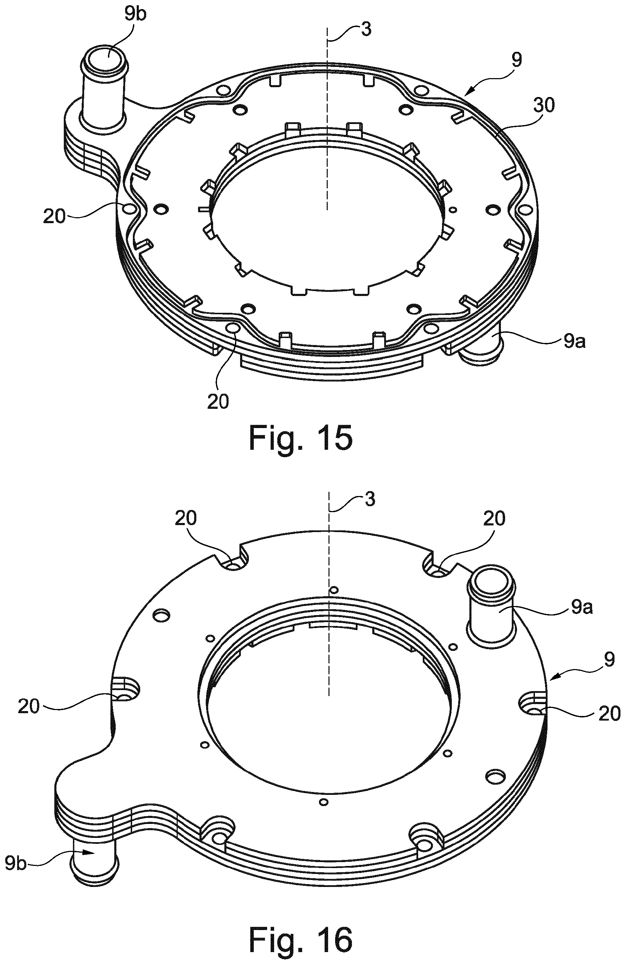

Fig. 15 shows a view of the cooling plate 9 from a side facing the carrier 2, and Fig. 16 shows a view of the cooling plate 9 from a side facing away from the carrier 2. As already described above, the cooling plate 9 has the inlet 9a and the outlet 9b and the cooling fluid can flow through it. A circumferential groove 30, in which the wall 4 of the carrier 2 is received in a positive and non-displaceable manner, can additionally be seen in Fig. 14 and Fig. 15.

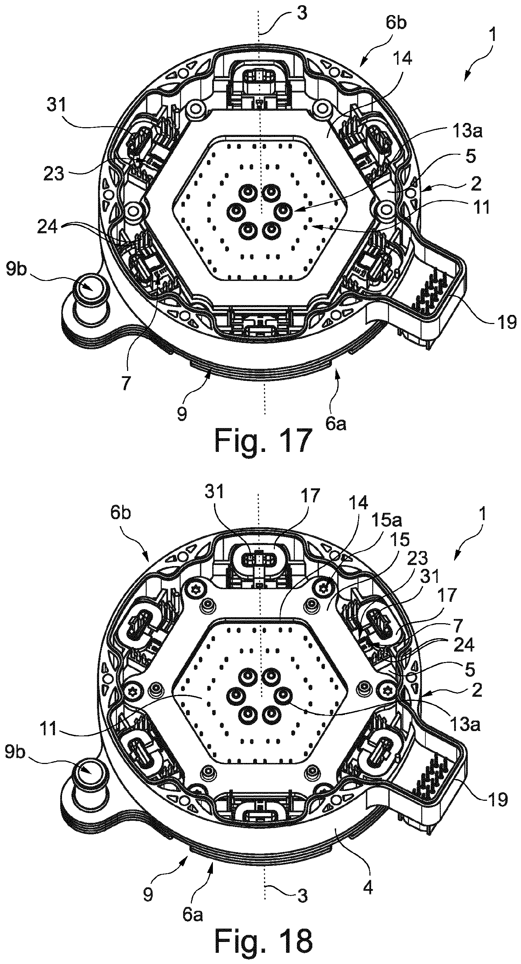

Fig. 17 shows a view of the carrier 2 comprising the foam plate 14, and Fig. 18 shows a view of the carrier 2 comprising the pressure plate 15 from a side facing the second area 6b of the carrier 2. The pressure plate 15 is thereby connected to the cooling plate 9 through the carrier ring 5 by means of the screw group 15a and presses the foam plate 14 against the capacitor plate 11, and the capacitor plate 11 against the contact bus bars 18. The contact bus bars 18 are thus also pressed between the transistor plates 7 and the capacitor plate 11, and connect the transistor plates 7 and the capacitor plate 11 to one another in an electroconductive manner. As can be seen in Fig. 18, the iron cores 17 are arranged in receptacles 31 of the carrier ring 5. The receptacles 31 are provided to receive phase terminals 35 of the electric motor 32.

Fig. 19 shows a view of the carrier 2 comprising the control board 16 from a side facing the second area 6b of the carrier 2. The thickenings 26 of the contact pins 24 thereby engage with the receiving openings 27 of the control board 16, whereby the contact pins 24 are secured in the control board 16 in a non-positive i.e. in press-fitted manner. The control board 16 is screw-connected to the pressure plate 15 via the screw group 16a.

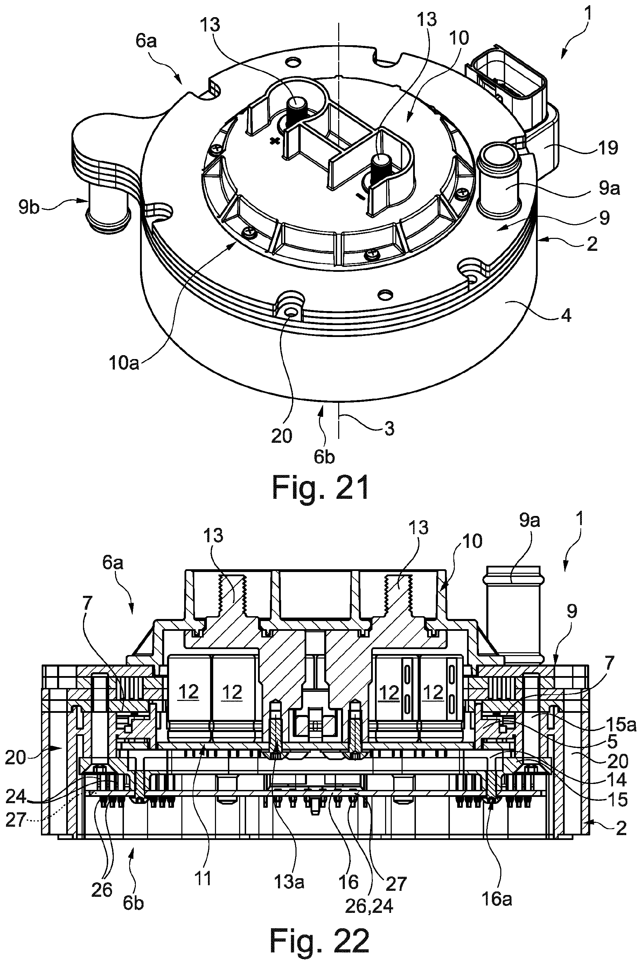

Fig. 20 shows a view of the inverter 1 without the cover 10, and Fig. 21 shows a view of the inverter 1 with the cover 10 from a side facing the first area 6a of the carrier 2. As can be seen in Fig. 20, the battery terminals 13 protrude through the carrier ring 5 and the cooling plate 9 axially to the outside, and the capacitors 12 are arranged symmetrically around the battery terminals 13 on the capacitor plate 11. It can be seen in Fig. 21 that the cover 10 is screw-connected to the cooling plate 9 by means of the screw group 10a, and the battery terminals 13 protrude through the cover 10 to the outside.

Fig. 22 shows a sectional view of the inverter 1. The capacitor plate 11 abuts against the carrier ring 5 in the second area 6b of the carrier 2, and the capacitors 12 of the capacitor plate 11 protrude through an opening of the carrier ring 5 into the first area 6a of the carrier 2. The pressure plate 15 is firmly connected to the cooling plate 9, so that the foam plate 14, the capacitor plate 11, the contact bus bars 18, and the transistor plates 7 are pressed together i.e. are sandwiched between the pressure plate 15 and the cooling plate 9. The capacitor plate 11 is thereby pressed against the contact bus bars 18 by means of the foam plate 14 and the pressure plate 15. The transistor plates 7 are secured to the carrier ring 5 in the first area 6a of the carrier 2 and are distributed around the opening of the carrier ring 5 and thus around the capacitors 12. The contact bus bars 18 are thereby pressed between the capacitor plate 11 and the transistor plates 7, and the transistor plates 7 and the capacitor plate 11 are thus electrically contacted with one another. The battery terminals 13 are fastened centrally on the capacitor plate 11 and protrude through the opening of the carrier ring 5 from the second area 6b into the first area 6a of the carrier 2. The battery terminals 13 are further guided axially to the outside through the cover 10 of the inverter 1. The control board 16 is arranged in the second area 6b of the carrier 2 and is screw-connected to the pressure plate 15. The control board 16 is electrically contacted with the transistor plates 7 via the contact pins 24 in the carrier 2.

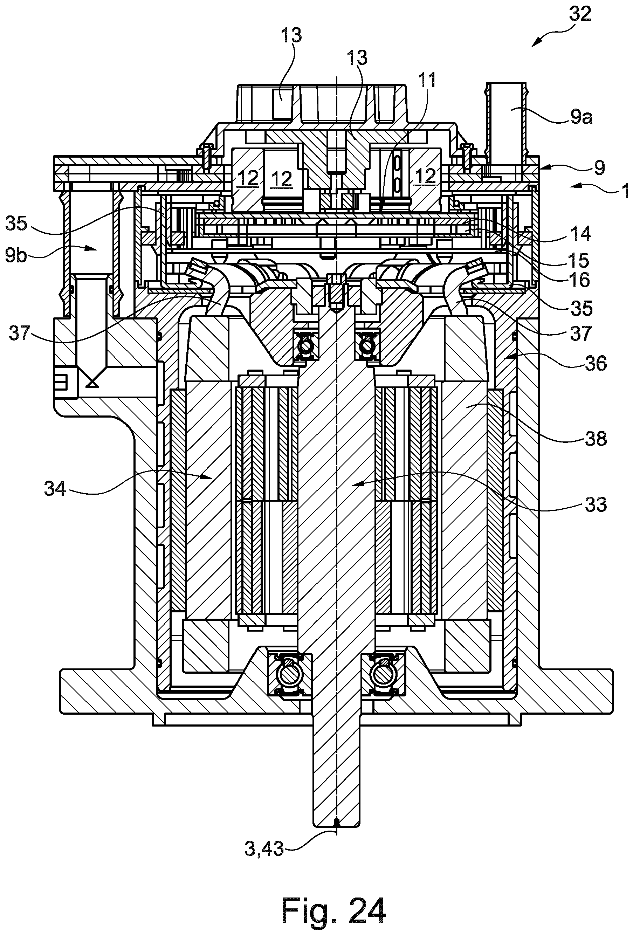

Fig. 23 shows an exploded view and Fig. 24 shows a sectional view of an electric motor 32 according to the invention. The electric motor 32 comprises a rotor 33 and a stator 34, which interact electromagnetically with one another. The rotor 33 can thereby be rotated around an axis of rotation 43, which coincides with the central axis 3 of the carrier 2 or inverter 1, respectively. The stator 34 comprises several coils 38 and a stator housing 36, which receives the coils 38. The rotor 33 is arranged in the stator 34, so that the coils 38 and the stator housing 36 encase the rotor 33. The inverter 1 is arranged axially to the stator 34 and is firmly connected to the stator housing 36 via a screw group 36a. For this purpose, the continuous screw openings 20 are provided in the cooling plate 9 of the inverter 1. The stator 34 is electrically contacted with the inverter 1 via several phase terminals 35, for the purpose of which the phase terminals 35 engage with the receptacles 31 of the inverter 1 and are connected to the transistor plates 7 of the inverter 1 in an electroconductive manner. The phase terminals 35 are thereby distributed symmetrically around the axis of rotation 43 and are arranged on assigned coil wires 37 radially on the outside.

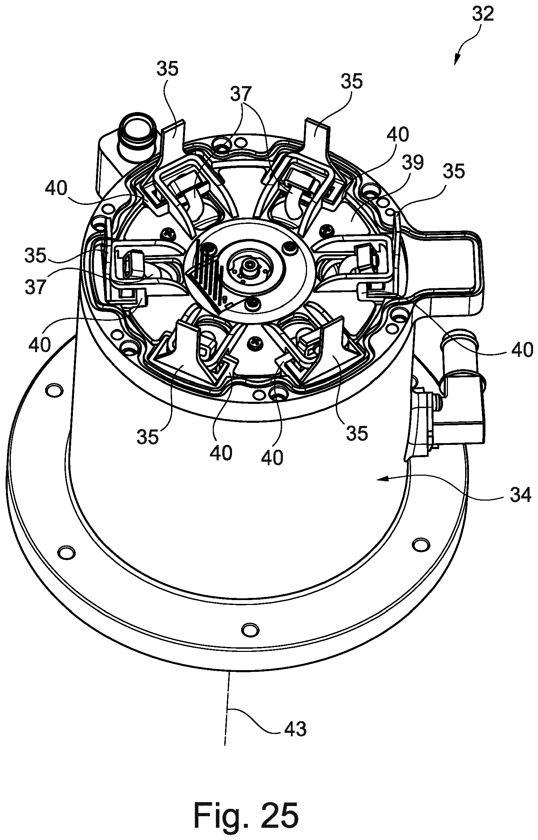

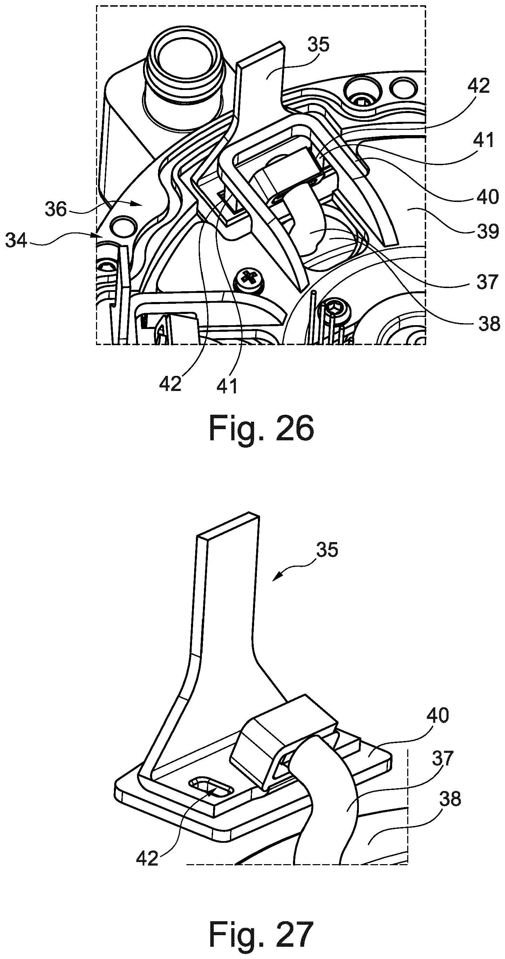

Fig. 25 shows a view of the electric motor 32 without the inverter 1. Fig. 26 and Fig. 27 show views of the individual phase terminals 35 in the electric motor 32. The phase terminals 35 are arranged on the assigned coil wires 37 radially on the outside and are connected to them in an electroconductive manner. The respective coil wire 37 thereby engages radially with the respective phase terminal 35. The respective phase terminal 35 is L-shaped and is pressed against the stator 34 or the stator housing 36, respectively, by means of a press ring 39.

An elastically deformable base 40 is in each case arranged between the respective phase terminal 35 and the stator 34 or the stator housing 36, respectively. As can be seen particularly well in Fig. 26, the press ring 39 has two position protrusions 41 for the respective phase terminal 35. The position protrusions 41 engage with position openings 42 of the respective phase terminal 35, whereby the phase terminals 35 are secured to the stator 34 in the correct position.

The inverter 1 according to the invention can be fully assembled independently of further elements of the electric motor 32. The effort as well as the costs can thus be reduced. In addition, the inverter 1 can be electrically contacted with the stator 34 in a simplified and reliable manner.

## Claims

1. An inverter (1) for an electric motor (32),
- wherein the inverter (1) comprises a capacitor plate (11) comprising several capacitors (12), several transistor plates (7) each comprising several transistors (8), a cooling plate (9), and a control board (16),
- wherein the inverter (1) comprises a hollow cylindrical carrier (2) comprising a central axis (3),
- wherein the control board (16), the capacitor plate (11), the respective transistor plates (7), and the cooling plate (9) are located axially one on top of the other,
- wherein the control board (16), the capacitor plate (11), and the respective transistor plates (7) are electrically interconnected,
- wherein the cooling plate (9) closes axially the carrier (2), which receives and supports the capacitor plate (11), the transistor plates (7), and the control board (16), and encases them in the circumferential direction to the outside,
**characterized in**
- **that** the inverter (1) forms a cohesive and fully assembled and assembly-ready for assembling on the electric motor (32) assembly unit with the carrier (2), the capacitor plate (11), the transistor plates (7), the cooling plate (9) and the control board (16),
- **that** a ring-shaped carrier ring (5), which is aligned transversely to the central axis (3), is integrally molded in the carrier (2), and
- **that** the carrier ring (5) divides an interior of the carrier (2) into two axially adjacent areas, wherein the transistor plates (7) are received and secured in the first area, and the capacitor plate (11) and the control board (16) are received and secured in the second axial area, and
- **that** the transistor plates (7) are circumferentially distributed on the ring-shaped carrier ring (5) around the central axis (3) and are fastened to the carrier ring (5) in a non-positive manner.

2. The inverter according to claim 1,
**characterized in**
- **that** at least one undercut securing element (21) and at least one clip (22) for the respective transistor plate (7) are formed on the carrier ring (5), and
- **that** the respective transistor plate (7) is fastened in a clamping manner to the carrier ring (5) by means of the at least one securing element (21) and the at least one clip (22).

3. The inverter according to claim 1 or 2,
**characterized in**
- **that** the capacitor plate (11), an elastically deformable foam plate (14), and a pressure plate (15) are arranged on the carrier ring (5), facing away from the transistor plates (7) and the cooling plate (9), and
- **that** the pressure plate (15) is firmly connected to the cooling plate (9) through the carrier ring (5).

4. The inverter according to claim 3,
**characterized in**
- **that** several axial slots, in each of which a contact bus bar (18) is received, are molded in the carrier ring (5), and
- **that** the respective contact bus bar (18) is pressed between the respective transistor plate (7) and the capacitor plate (11), and the transistor plates (7) are thus contacted with the capacitor plate (11) in an electroconductive manner.

5. The inverter according to one of claims 1 to 4,
**characterized in**
- **that** the inverter (1) has several electroconductive contact pins (24) for interconnecting the respective transistor plate (7) with the control board (16), and
- **that** the respective contact pins (24) are cast integrally into the carrier (2) and are aligned axially from the transistor plates (7) towards the control board (16).

6. The inverter according to claim 5,
**characterized in**
**that** the respective transistor plate (7) is electrically contacted with the respective assigned contact pin (24) via an electroconductive wire (25), which is wire bonded to the respective transistor plate (7) and to the respective contact pin (24).

7. The inverter according to claim 5 or 6,
**characterized in**
- **that** facing the control board (16), the respective contact pin (24) has an end-side thickening (26), and the control board (16) has a receiving opening (27) for the respective thickening (26), and
- **that** the respective thickening (26) engages with the respective receiving opening (27), and the contact pin (24) is thus fastened in a clamping manner in the control board (16) and is contacted with the control board (16) in an electroconductive manner.

8. The inverter according to one of claims 1 to 7,
**characterized in**
**that** the cooling plate (9) can be flowed through by a cooling fluid and abuts against the transistor plates (7) so as to transfer heat.

9. The inverter according to one of claims 1 to 8,
**characterized in**
- **that** the capacitors (12) are arranged on the capacitor plate (11) facing the transistor plates (7), and
- **that** the transistor plates (7) are arranged in the carrier (2) so as to revolve and so as to be distributed around the central axis (3), and the capacitors (12) are arranged centrally on the capacitor plate (11), and
- **that** the capacitors (12) are axially guided between the transistor plates (7).

10. The inverter according to one of claims 1 to 9,
**characterized in**
- **that** the inverter (1) has two battery terminals (13), which are identical to one another, each comprising three pole contacts (28) for contacting with the capacitor plate (11), and
- **that** the battery terminals (13) are centrally fastened to the capacitor plate (11) and face the transistor plates (7) and are axially aligned, and
- **that** the battery terminals (13) are in each case formed by a connecting piece comprising a dielectric casing and electroconductive lines located on the inside.

11. The inverter according to claim 10,
**characterized in**
- **that** the respective battery terminal (13) has a first bridge (29a), which is parallel to the capacitor plate (11) and which connects the central pole contact (28) to the one lateral pole contact (28) in an electroconductive manner, and
- **that** the respective battery terminal (13) has a second bridge (29b), which is parallel to the capacitor plate (11) and which connects the central pole contact (28) to the other lateral pole contact (28) in an electroconductive manner, and
- **that** the first bridge (29a) and the second bridge (29b) are aligned at an angle to one another and are axially offset to one another, and
- **that** the first bridge (29a) of the one battery terminal (13) in each case bridges the second bridge (29b) of the other battery terminal (13), so that the pole contacts (28) of the one battery terminal (13) and the pole contacts (28) of the other battery terminal (13) are arranged in a circle and so as to alternately in a circle.

12. The inverter according to claim 10 or 11,
**characterized in**
**that** the transistor plates (7) are arranged in the carrier (2) so as to revolve and so as to be distributed around the central axis (3), and the battery terminals (13) are guided axially to the outside between the transistor plates (7).

13. An electric motor (32),
- wherein the electric motor (32) comprises a rotor (33), which can be rotated around an axis of rotation (43), and a stator (34), which interact electromagnetically with one another,
- wherein the stator (34) comprises several stator coils (38), wherein at least some of the stator coils (38) are electrically contacted directly with three electrical phases via their coil wires (37),
- wherein, for the respective phase, the electric motor (32) comprises at least one electroconductive phase terminal (35), which is connected to the assigned coil wire (37) in an electroconductive manner,
**characterized in**
**that** the electric motor (32) comprises the inverter (1) according to one of the preceding claims, wherein the inverter (1) is fastened to the stator (34) facing the phase terminals (35), and wherein the phase terminals (35) engage with the inverter (1) and are contacted with the transistor plates (7) in an electroconductive manner.

14. The motor according to claim 13,
**characterized in**
- **that** the respective phase terminal (35) is located radially on the outside of the assigned coil wire (37) and the assigned coil wire (37) thus engages radially with the respective phase terminal (35), and
- **that** an elastically deformable base (40) is in each case arranged between the respective phase terminals (35) and the stator (34), and the respective phase terminals (35) are pressed against the stator (34) by means of a press ring (39) and are thus fastened to the stator (34).

## Patentansprüche

1. Wechselrichter (1) für einen Elektromotor (32),
- wobei der Wechselrichter (1) eine Kondensatorplatine (11), die mehrere Kondensatoren (12) umfasst, mehrere Transistorplatinen (7), die jeweils mehrere Transistoren (8) umfassen, eine Kühlplatine (9) und eine Steuerplatine (16) umfasst,
- wobei der Wechselrichter (1) einen hohlzylindrischen Träger (2) umfasst, der eine Mittelachse (3) umfasst,
- wobei die Steuerplatine (16), die Kondensatorplatine (11), die jeweiligen Transistorplatinen (7) und die Kühlplatine (9) axial übereinander angeordnet sind,
- wobei die Steuerplatine (16), die Kondensatorplatine (11) und die jeweiligen Transistorplatinen (7) elektrisch untereinander verbunden sind,
- wobei die Kühlplatine (9) den Träger (2), der die Kondensatorplatine (11), die Transistorplatinen (7) und die Steuerplatine (16) aufnimmt und trägt, axial abschließt und in Umfangsrichtung nach außen umhüllt,
**dadurch gekennzeichnet,**
- **dass** der Wechselrichter (1) mit dem Träger (2), der Kondensatorplatine (11), den Transistorplatinen (7), der Kühlplatine (9) und der Steuerplatine (16) eine zusammenhängende und fertig montierte sowie zur Montage am Elektromotor (32) bereite Montageeinheit bildet,
- **dass** ein ringförmiger Trägerring (5), der quer zu der Mittelachse (3) ausgerichtet ist, einstückig mit dem Träger (2) gebildet ist; und
- **dass** der Trägerring (5) einen Innenraum des Trägers (2) in zwei axial benachbarte Bereiche unterteilt, wobei die Transistorplatinen (7) im ersten Bereich aufgenommen und befestigt sind und die Kondensatorplatine (11) und die Steuerplatine (16) im zweiten axialen Bereich aufgenommen und befestigt sind, und
- **dass** die Transistorplatinen (7) auf dem ringförmigen Trägerring (5) umfangsmäßig um die Mittelachse (3) verteilt angeordnet und auf kraftschlüssige Weise am Trägerring (5) befestigt sind.

2. Wechselrichter nach Anspruch 1,
**dadurch gekennzeichnet,**
- **dass** am Trägerring (5) zumindest ein unterschnittenes Befestigungselement (21) und zumindest eine Klammer (22) für die jeweilige Transistorplatine (7) gebildet sind, und
- **dass** die jeweilige Transistorplatine (7) mittels des zumindest einen Sicherungselements (21) und der zumindest einen Klammer (22) auf klemmende Weise am Trägerring (5) befestigt ist.

3. Wechselrichter nach Anspruch 1 oder 2,
**dadurch gekennzeichnet,**
- **dass** die Kondensatorplatine (11), eine elastisch verformbare Schaumstoffplatine (14) und eine Druckplatine (15) von den Transistorplatinen (7) abgewandt auf dem Trägerring (5) und der Kühlplatine (9) angeordnet sind, und
- **dass** die Druckplatine (15) durch den Trägerring (5) fest mit der Kühlplatine (9) verbunden ist.

4. Wechselrichter nach Anspruch 3,
**dadurch gekennzeichnet,**
- **dass** an dem Trägerring (5) mehrere axiale Schlitze gebildet sind, in welchen jeweils eine Kontaktsammelschiene (18) aufgenommen ist, und
- **dass** die jeweilige Kontaktsammelschiene (18) zwischen der jeweiligen Transistorplatine (7) und der Kondensatorplatine (11) gedrückt wird, und dadurch die Transistorplatinen (7) mit der Kondensatorplatine (11) elektrisch leitend kontaktiert werden.

5. Wechselrichter nach einem der Ansprüche 1 bis 4,
**dadurch gekennzeichnet,**
- **dass** der Wechselrichter (1) mehrere elektrisch leitende Kontaktstifte (24) zur Verbindung der jeweiligen Transistorplatine (7) mit der Steuerplatine (16) aufweist, und
- **dass** die jeweiligen Kontaktstifte (24) in den Träger (2) einstückig eingegossen sind und von den Transistorplatinen (7) zu der Steuerplatine (16) axial ausgerichtet sind.

6. Wechselrichter nach Anspruch 5,
**dadurch gekennzeichnet,**
**dass** die jeweilige Transistorplatine (7) über einen elektrisch leitenden Draht (25), der mit der jeweiligen Transistorplatine (7) und mit dem jeweiligen Kontaktstift (24) drahtverbunden ist, elektrisch mit dem jeweils zugeordneten Kontaktstift (24) kontaktiert ist.

7. Wechselrichter nach Anspruch 5 oder 6,
**dadurch gekennzeichnet,**
- **dass** der jeweilige Kontaktstift (24) zu der Steuerplatine (16) hin jeweils eine endseitige Verdickung (26) aufweist und die Steuerplatine (16) eine Aufnahmeöffnung (27) für die jeweilige Verdickung (26) aufweist, und
- **dass** die jeweilige Verdickung (26) in die jeweilige Aufnahmeöffnung (27) eingreift und dadurch der Kontaktstift (24) klemmend in der Steuerplatine (16) befestigt ist und elektrisch leitend mit der Steuerplatine (16) kontaktiert ist.

8. Wechselrichter nach einem der Ansprüche 1 bis 7,
**dadurch gekennzeichnet,**
**dass** die Kühlplatine (9) von einem Kühlfluid durchströmt werden kann und zur Wärmeübertragung an den Transistorplatinen (7) anliegt.

9. Wechselrichter nach einem der Ansprüche 1 bis 8,
**dadurch gekennzeichnet,**
- **dass** die Kondensatoren (12) auf der den Transistorplatinen (7) zugewandten Kondensatorplatine (11) angeordnet sind, und
- **dass** die Transistorplatinen (7) so im Träger (2) angeordnet sind, dass sie um die Mittelachse (3) drehen und verteilt sind, und die Kondensatoren (12) mittig auf der Kondensatorplatine (11) angeordnet sind, und
- **dass** die Kondensatoren (12) zwischen den Transistorplatinen (7) axial geführt sind.

10. Wechselrichter nach einem der Ansprüche 1 bis 9,
**dadurch gekennzeichnet,**
- **dass** der Wechselrichter (1) zwei untereinander identische Batterieklemmen (13) aufweist, die jeweils drei Polkontakte (28) zur Kontaktierung mit der Kondensatorplatine (11) umfassen, und
- **dass** die Batterieklemmen (13) mittig an der Kondensatorplatine (11) befestigt sind und zu der Transistorplatinen (7) weisen und axial ausgerichtet sind, und
- **dass** die Batterieklemmen (13) in jedem Fall durch ein Anschlussstück gebildet sind, das eine dielektrische Ummantelung und im Inneren liegende elektrisch leitfähige Leitungen umfasst.

11. Wechselrichter nach Anspruch 10,
**dadurch gekennzeichnet,**
- **dass** die jeweilige Batterieklemme (13) eine erste Brücke (29a) aufweist, die parallel zur Kondensatorplatine (11) ist und den mittleren Polkontakt (28) mit dem einen seitlichen Polkontakt (28) elektrisch leitend verbindet, und
- **dass** die jeweilige Batterieklemme (13) eine zweite Brücke (29b) aufweist, die parallel zur Kondensatorplatine (11) ist; und den mittleren Polkontakt (28) mit dem anderen seitlichen Polkontakt (28) elektrisch leitend verbindet, und
- **dass** die erste Brücke (29a) und die zweite Brücke (29b) zueinander in einem Winkel ausgerichtet und zueinander axial versetzt sind, und
- **dass** die erste Brücke (29a) der einen Batterieklemme (13) in jedem Fall die zweite Brücke (29b) der anderen Batterieklemme (13) überbrückt, sodass die Polkontakte (28) der einen Batterieklemme (13) und die Polkontakte (28) der anderen Batterieklemme (13) in einem Kreis und abwechselnd angeordnet sind.

12. Wechselrichter nach Anspruch 10 oder 11,
**dadurch gekennzeichnet,**
**dass** die Transistorplatinen (7) so im Träger (2) angeordnet sind, dass sie um die Mittelachse (3) drehen und verteilt sind, und die Batterieklemmen (13) zwischen den Transistorplatinen (7) axial nach außen geführt sind.

13. Elektromotor (32),
- wobei der Elektromotor (32) einen Rotor (33), der um eine Drehachse (43) drehbar ist, und einen Stator (34) umfasst, die elektromagnetisch miteinander zusammenwirken,
- wobei der Stator (34) mehrere Statorspulen (38) umfasst, wobei zumindest einige der Statorspulen (38) über ihre Spulendrähte (37) elektrisch direkt mit drei elektrischen Phasen kontaktiert sind,
- wobei der Elektromotor (32) für die jeweilige Phase zumindest eine elektrisch leitende Phasenklemme (35) umfasst, die mit dem zugeordneten Spulendraht (37) elektrisch leitend verbunden ist,
**dadurch gekennzeichnet,**
**dass** der Elektromotor (32) den Wechselrichter (1) nach einem der vorstehenden Ansprüche umfasst, wobei der Wechselrichter (1) den Phasenklemmen (35) zugewandt am Stator (34) befestigt ist und wobei die Phasenklemmen (35) in den Wechselrichter (1) eingreifen und elektrisch leitend mit den Transistorplatinen (7) kontaktiert sind.

14. Motor nach Anspruch 13,
**dadurch gekennzeichnet,**
- **dass** die jeweilige Phasenklemme (35) radial auf der Außenseite des zugeordneten Spulendrahtes (37) gelegen ist und der zugeordnete Spulendraht (37) deshalb radial in die jeweiligen Phasenklemme (35) eingreift, und
- **dass** zwischen den jeweiligen Phasenklemmen (35) und dem Stator (34) in jedem Fall eine elastisch verformbare Basis (40) angeordnet ist, und die jeweiligen Phasenklemmen (35) mittels eines Druckrings (39) gegen den Stator (34) gedrückt werden und somit am Stator (34) befestigt werden.

## Revendications

1. Onduleur (1) pour un moteur électrique (32),
- dans lequel l'onduleur (1) comprend une plaque de condensateurs (11) comprenant plusieurs condensateurs (12), plusieurs plaques de transistors (7) comprenant chacune plusieurs transistors (8), une plaque de refroidissement (9) et une carte de commande (16),
- dans lequel l'onduleur (1) comprend un support cylindrique creux (2) comprenant un axe central (3),
- dans lequel la carte de commande (16), la plaque de condensateurs (11), les plaques de transistors respectives (7) et la plaque de refroidissement (9) sont placées axialement les unes au-dessus des autres,
- dans lequel la carte de commande (16), la plaque de condensateurs (11) et les plaques de transistors respectives (7) sont interconnectées électriquement,
- dans lequel la plaque de refroidissement (9) ferme axialement le support (2), qui reçoit et soutient la plaque de condensateurs (11), les plaques de transistors (7) et la carte de commande (16) et les entoure dans la direction circonférentielle vers l'extérieur,
**caractérisé en ce que**
- l'onduleur (1) forme, avec le support (2), la plaque de condensateurs (11), les plaques de transistors (7), la plaque de refroidissement (9) et la carte de commande (16), une unité d'assemblage cohésive entièrement assemblée et prête au montage pour être assemblée sur le moteur électrique (32),
- un anneau de support de forme annulaire (5), qui est aligné transversalement à l'axe central (3), est moulé d'un seul tenant dans le support (2) et
- l'anneau de support (5) divise un espace intérieur du support (2) en deux zones adjacentes axialement, dans lequel les plaques de transistors (7) sont reçues et fixées dans la première zone et la plaque de condensateurs (11) et la carte de commande (16) sont reçues et fixées dans la seconde zone axiale et
- les plaques de transistors (7) sont réparties circonférentiellement sur l'anneau de support de forme annulaire (5) autour de l'axe central (3) et sont fixées à force à l'anneau de support (5).

2. Onduleur selon la revendication 1,
**caractérisé en ce que**
- au moins un élément de fixation évidé (21) et au moins une attache (22) destinés à la plaque de transistors respective (7) sont formés sur l'anneau de support (5) et
- la plaque de transistors respective (7) est fixée par serrage à l'anneau de support (5) au moyen du au moins un élément de fixation (21) et de la au moins une attache (22).

3. Onduleur selon la revendication 1 ou 2,
**caractérisé en ce que**
- la plaque de condensateurs (11), une plaque de mousse déformable d'une manière élastique (14) et une plaque de pression (15) sont agencées sur l'anneau de support (5) en étant orientées à l'opposé des plaques de transistors (7) et de la plaque de refroidissement (9) et
- la plaque de pression (15) est fermement reliée à la plaque de refroidissement (9) par l'intermédiaire de l'anneau de support (5).

4. Onduleur selon la revendication 3,
**caractérisé en ce que**
- plusieurs fentes axiales, dans chacune desquelles est reçue une barre omnibus de contact (18), sont moulées sur l'anneau de support (5) et
- la barre omnibus de contact respective (18) est pressée entre la plaque de transistors respective (7) et la plaque de condensateurs (11) et, de ce fait, les plaques de transistors (7) sont en contact avec la plaque de condensateurs (11) d'une manière électroconductrice.

5. Onduleur selon l'une des revendications 1 à 4,
**caractérisé en ce que**
- l'onduleur (1) présente plusieurs broches de contact électroconductrices (24) conçues pour interconnecter la plaque de transistors respective (7) et la carte de commande (16) et
- les broches de contact respectives (24) sont coulées d'une seule pièce dans le support (2) et sont alignées axialement depuis les plaques de transistors (7) vers la carte de commande (16).

6. Onduleur selon la revendication 5,
**caractérisé en ce que**
la plaque de transistors respective (7) est en contact électrique avec la broche de contact affectée respective (24) par l'intermédiaire d'un fil électroconducteur (25) qui est microsoudé à la plaque de transistors respective (7) et à la broche de contact respective (24).

7. Onduleur selon la revendication 5 ou 6,
**caractérisé en ce que**
- en face de la carte de commande (16), la broche de contact respective (24) présente un épaississement côté extrémité (26) et la carte de commande (16) présente une ouverture de réception (27) destinée à l'épaississement respectif (26) et
- l'épaississement respectif (26) vient en prise dans l'ouverture de réception respective (27) et, de ce fait, la broche de contact (24) est fixée par serrage dans la carte de commande (16) et est en contact avec la carte de commande (16) d'une manière électroconductrice.

8. Onduleur selon l'une des revendications 1 à 7,
**caractérisé en ce que**
la plaque de refroidissement (9) peut être traversée par un fluide de refroidissement et est en butée contre les plaques de transistors (7) de façon à transférer de la chaleur.

9. Onduleur selon l'une des revendications 1 à 8,
**caractérisé en ce que**
- les condensateurs (12) sont disposés sur la plaque de condensateurs (11) face aux plaques de transistors (7) et
- les plaques de transistors (7) sont disposées dans le support (2) de manière à être rotatives et à être réparties autour de l'axe central (3) et les condensateurs (12) sont disposés au centre sur la plaque de condensateurs (11) et
- les condensateurs (12) sont guidés axialement entre les plaques de transistors (7).

10. Onduleur selon l'une des revendications 1 à 9,
**caractérisé en ce que**
- l'onduleur (1) présente deux bornes de batterie (13) identiques l'une à l'autre et comprenant chacune trois contacts polaires (28) permettant un contact avec la plaque de condensateurs (11) et
- les bornes de batterie (13) sont fixées au centre de la plaque de condensateurs (11), sont orientées vers les plaques de transistors (7) et sont alignées axialement et
- dans chaque cas, les bornes de batterie (13) sont constituées d'une pièce de raccordement comprenant un boîtier diélectrique et des lignes électroconductrices situées à l'intérieur.

11. Onduleur selon la revendication 10,
**caractérisé en ce que**
- la borne de batterie respective (13) présente un premier pont (29a) qui est parallèle à la plaque de condensateurs (11) et qui relie le contact polaire central (28) au premier contact polaire latéral (28) d'une manière électroconductrice et
- la borne de batterie respective (13) présente un second pont (29b) qui est parallèle à la plaque de condensateurs (11) et qui relie le contact polaire central (28) à l'autre contact polaire latéral (28) d'une manière électroconductrice et
- le premier pont (29a) et le second pont (29b) sont alignés selon un angle l'un par rapport à l'autre et sont décalés axialement l'un par rapport à l'autre et
- dans chaque cas, le premier pont (29a) de la première borne de batterie (13) relie en pont le second pont (29b) de l'autre borne de batterie (13), de sorte que les contacts polaires (28) de la première borne de batterie (13) et les contacts polaires (28) de l'autre borne de batterie (13) sont disposés en cercle et en alternance dans le cercle.

12. Onduleur selon la revendication 10 ou 11,
**caractérisé en ce que**
les plaques de transistors (7) sont disposées dans le support (2) de manière à être rotatives et à être réparties autour de l'axe central (3) et les bornes de batterie (13) sont guidées axialement vers l'extérieur entre les plaques de transistors (7).

13. Moteur électrique (32),
- dans lequel le moteur électrique (32) comprend un rotor (33), pouvant tourner autour d'un axe de rotation (43), ainsi qu'un stator (34), qui interagissent l'un avec l'autre d'une manière électromagnétique,
- dans lequel le stator (34) comprend une pluralité de bobines de stator (38), dans lequel au moins certaines des bobines de stator (38) sont en contact électrique direct avec trois phases électriques par l'intermédiaire de leurs fils de bobines (37),
- dans lequel, pour la phase respective, le moteur électrique (32) comprend au moins une borne de phase électroconductrice (35) qui est raccordée au fil de bobine affecté (37) d'une manière électroconductrice,
**caractérisé en ce que**
le moteur électrique (32) comprend l'onduleur (1) selon l'une des revendications précédentes, dans lequel l'onduleur (1) est fixé au stator (34) orienté vers les bornes de phase (35) et dans lequel les bornes de phase (35) sont reliées à l'onduleur (1) et sont en contact avec les plaques de transistors (7) d'une manière électroconductrice.

14. Moteur selon la revendication 13,
**caractérisé en ce que**
- la borne de phase respective (35) est située radialement à l'extérieur du fil de bobine affecté (37) et, par conséquent, le fil de bobine affecté (37) est relié radialement à la borne de phase respective (35) et
- dans chaque cas, une base déformable d'une manière élastique (40) est disposée entre les bornes de phase respectives (35) et le stator (34) et les bornes de phase respectives (35) sont pressées contre le stator (34) au moyen d'un anneau de pression (39) et sont ainsi fixées au stator (34).
